Europäisches Patentamt

European Patent Office

Office européen des brevets

(19)

(11) Veröffentlichungsnummer : **0 431 382 B1**

(12)

# EUROPÄISCHE PATENTSCHRIFT

(45) Veröffentlichungstag der Patentschrift :
05.01.94 Patentblatt 94/01

(51) Int. Cl.⁵ : **B61H 5/00,** F16D 65/56,
B61H 15/00

(21) Anmeldenummer : **90122085.5**

(22) Anmeldetag : **19.11.90**

(54) **Zuspanngestänge für Scheibenbremsen.**

(30) Priorität : **05.12.89 DE 3940221**

(43) Veröffentlichungstag der Anmeldung :
**12.06.91 Patentblatt 91/24**

(45) Bekanntmachung des Hinweises auf die
Patenterteilung :
**05.01.94 Patentblatt 94/01**

(84) Benannte Vertragsstaaten :
**AT CH DE ES FR GB IT LI SE**

(56) Entgegenhaltungen :
**DE-A- 3 134 794
DE-A- 3 326 374
DE-A- 3 542 937
DE-B- 2 710 585**

(73) Patentinhaber : **KNORR-BREMSE AG**
**Postfach 40 10 60**
**D-80710 München (DE)**

(72) Erfinder : **Starck, Günter**
**Sonnenhang 20**
**W-8069 Ilmmünster (DE)**

## Beschreibung

Die Erfindung betrifft Zuspanngestänge für Scheibenbremsen von Fahrzeugen, insbesondere Schienenfahrzeugen, mit einer Bremszange, deren beide Bremshebel an ihren einen Enden an einem Betriebsbremskraftmotor, insbesondere Bremszylinder, und an ihren anderen Enden an gegen eine Bremsscheibe anpreßbaren Bremsbacken angelenkt sind, mit einer die Bremshebel in deren mittleren Bereich verbindenden Zugstange, deren Länge vermittels einer Hand- bzw. Feststellbremsvorrichtung verkürzbar ist.

Ein derartiges Zuspanngestänge für eine sowohl als Betriebs- wie als Hand- bzw. Feststellbremse betreibbare Scheibenbremse ist aus der DE-OS 33 26 374 bekannt. Hierbei ist die Zugstange als Lüftspielnachsteller ausgebildet, welcher mittels justierbarer Verschraubungen arbeitet. Dabei kann ein Feststellbremskraftmotor vorgesehen sein, mittels welchem die Verschraubung der Zugstange derart betätigbar ist, daß durch Verkürzen der Zugstange die Scheibenbremse zugespannt wird. Die Zugstange stellt bei diesem bekannten Zuspanngestänge jedoch ein relativ kompliziertes Sonderbauteil dar, das entsprechend teuer ist; der Feststellbremskraftmotor ist bei diesem bekannten Zuspanngestänge normal zur Ebene der Bremsstange und aus dieser Ebene hervorspringend anzuordnen, er benötigt damit einen oftmals durch andere Bauteile besetzten Raum, so daß das Zuspanngestänge nicht verwendbar ist.

Es ist Aufgabe der Erfindung ein Zuspanngestänge der eingangs genannten Art in baulich einfacher Weise und mit einfachen Mitteln, also billig und betriebssicher, derart auszubilden, daß es lediglich einen bei einer Vielzahl von Fahrzeugen freien Einbauraum benötigt. Das Zuspanngestänge soll auch für Fahrzeuge verwendbar sein, welche auf einer Fahrzeugachse mehrere, derzeit bekannt bis zu vier Bremsscheiben mit jeweils einer zugeordneten Bremszange bzw. einer entsprechenden Bremszangenkombination besitzen. Außerdem soll das zu schaffende Zuspanngestänge eine Anpassung oder Änderung der Zugspannkräfte für die Hand- bzw. Feststellbremseinrichtung ohne Beeinflussung der Betriebsbremse ermöglichen, es soll außerdem ein Überlagern bzw. eine Addition der Betriebsbrems- und Feststell- bzw. Handbremskräfte vermieden werden.

Diese Aufgabe wird nach der Erfindung dadurch gelöst, daß die Bremshebel an der Zugstange vermittels Anlenkstellen, die in Längsrichtung der Zugstange zumindest in Spreizrichtung begrenzt verschieblich sind, angelenkt sind, daß ein von Hand oder vermittels eines Feststellbremskraftmotors, insbesondere eines Federspeichers betätigbares, zangenartiges Feststellbremsgestänge vorgesehen ist und daß die Anlenkstellen vermittels des Feststellbremsgestänges einander annäherbar sind.

Die Unteransprüche zeigen nach der weiteren Erfindung vorteilhafte, weitere Ausbildungsmöglichkeiten für ein derartiges Zugspanngestänge auf.

In der Zeichnung sind Ausführungsbeispiele für nach der Erfindung ausgebildete Zuspanngstänge dargestellt, und zwar zeigt

Fig.1 und 2     schematisch ein erstes Ausführungsbeispiel im Lösezustand bzw. bei betätigter Hand- bzw. Feststellbremse,

Fig.3 und 4     ein zweites Ausführungsbeispiel in Aufsicht und Seitenansicht und

Fig .5     ein drittes Ausführungsbeispiel in schematischer Darstellung.

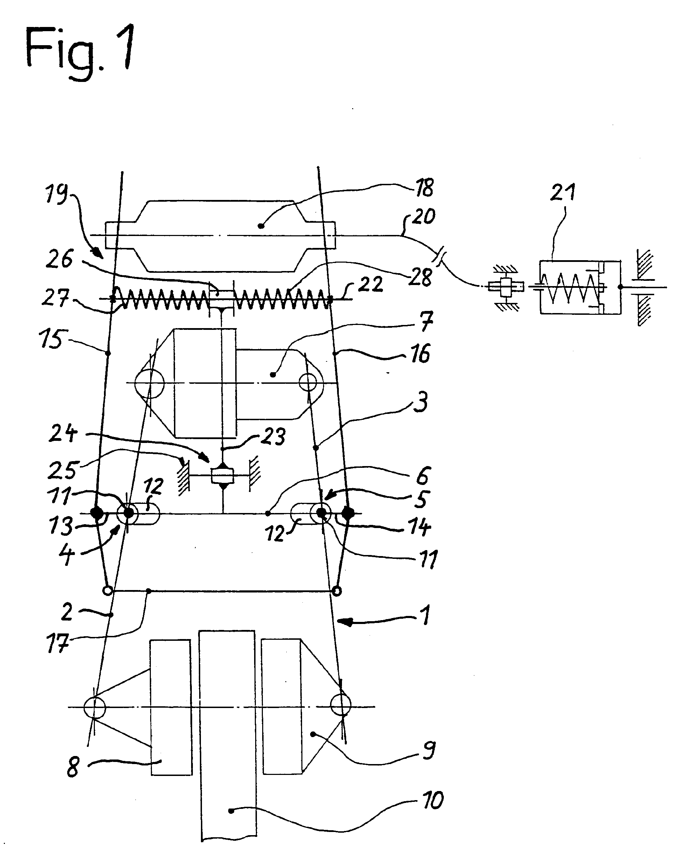

Aus Fig .1 und 2 ist eine übliche Bremszange 1 für eine Scheibenbremse ersichtlich, welche zwei im wesentlichen parallel nebeneinander verlaufende Bremshebel 2 und 3 aufweist, welche in ihren mittleren Bereichen durch eine an Anlenkstellen 4 und 5 angelenkte Zugstange 6 verbunden sind. Die einen Enden der Bremshebel 2 und 3 sind durch einen zwischen diesen eingespannten, als Bremszylinder 7 ausgebildeten Betriebsbremskraftmotor auseinanderspreizbar, an die anderen Enden der Bremshebel 2 und 3 ist jeweils eine Bremsbacke 8 bzw. 9 angelenkt, zwischen die beiden Bremsbacken 8 und 9 greift eine Bremsscheibe ein, an welche die Bremsbacken 8 und 9 anpreßbar sind. Jede der beiden Anlenkstellen 4 und 5 weist jeweils einen Anlenkbolzen 11 auf, deren jeder gleitsteinartig in einer sich in Längsrichtung der Zugstange 6 in deren Endbereich erstreckenden Ausnehmung 12 verschieblich geführt ist. An den Anlenkbolzen 11 sind die Bremshebel 2 und 3 sowie jeweils ein Hebelansatz 13 bzw. 14 angelenkt. Der Hebelansatz 13 kragt etwa rechtwinklig von einem Zangenhebel 15 und der Hebelansatz 14 entsprechend von einem Zangenhebel 16 aus. Die beiden Zangenhebel 15 und 16 verlaufen im wesentlichen parallel nebeneinander zu beiden Seiten der Bremszange 1, sie sind einerseits an ihren nahe der Hebelansätze 13 und 14 befindlichen, der Bremsscheibe 10 zugewandten und zu dieser hin etwas abgekröpft verlaufenden Enden durch eine zweite Zugstange 17 gelenkig miteinander verbunden und zwischen ihre anderen Enden greift ein Feststellbremskraftmotor 18 ein, mittels welchem diese Enden zusammenziehbar sind; die Zangenhebel 15 und 16 bilden zusammen mit der zweiten Zugstange 17 sowie dem Festellbremskraftmotor 18 ein zangenartiges Feststellbremsgestänge 19. Der Feststellbremskraftmotor 18 kann in der in Fig.1 angedeuteten Weise manuell über eine nicht dargestellte Handbetätigungsvorrichtung vermittels eines nur skizzierten Bowdenzuges 20 betätigbar sein, wobei dem Bowdenzug 20 ein Federspeicher 21 zugeordnet ist, wie es allgemein üblich ist. Im Feststellbremskraftmotor 18 ist dabei die Seele des Bowdenzuges 20 mit dem einen und die Hülle mit dem anderen Zangenhebel 15 bzw. 16 zu verbinden. In Abänderung hierzu ist es auch möglich, den Feststellbremskraftmotor als durch ein Druckmittel lösbaren Federspeicherbremszylinder auszubilden.

Nahe des Feststellbremskraftmotors 18 befindet sich eine Querstange 22, deren Enden die Zangenhebel 15 und 16 verschieblich durchgreifen; ein Traghebel 23 verbindet die mittleren Abschnitte der Querstange 22 sowie der Zugstange 6 miteinander, der Traghebel 23 selbst ist vermittels einer Halterung 24 am Fahrzeugrahmen 25 gehaltert. Die Verbindungsstelle zwischen der Querstange 22 und dem Traghebel 23 ist als eine Halterung 26 ausgebildet, welche als Federwiderlager für zwei beidseitig zu den Zangenhebeln 15 bzw. 16 hin sich erstreckende, vorgespannte Druckfedern 27 bzw. 28 dient. Die Querstange 22 durchsetzt zur Führung die Druckfedern 27 und 28.

Bei gelöster Bremse gemäß Fig.1 nehmen die Teile des Zuspanngestänges die dort ersichtlichen Lagen ein, die Bremsbacken 8 und 9 befinden sich mit geringem Abstand vor der Bremsscheibe 10, die Druckfedern 27 und 28 spreizen die Zangenhebel 15 und 16 derart auseinander, daß die Anlenkbolzen 11 jeweils an den äußeren Begrenzungen der langlochartigen Ausnehmungen 12 anliegen und somit ihren größtmöglichen Abstand voneinander aufweisen.

Zum Bewirken einer Betriebsbremsung werden vermittels des Bremszylinders 7 die Bremshebel 2 und 3 bremszylinderseitig auseinandergespreizt, sie drehen sich dabei um die durch die Zugstange 6 gehaltenen Anlenkbolzen 11 und legen bzw. pressen sodann die Bremsbacken 8 und 9 an die Bremsscheibe 10 an. Das Feststellbremsgestänge 19 verbleibt dabei in Ruhe. Das Lösen der Betriebsbremsung erfolgt entsprechend umgekehrt.

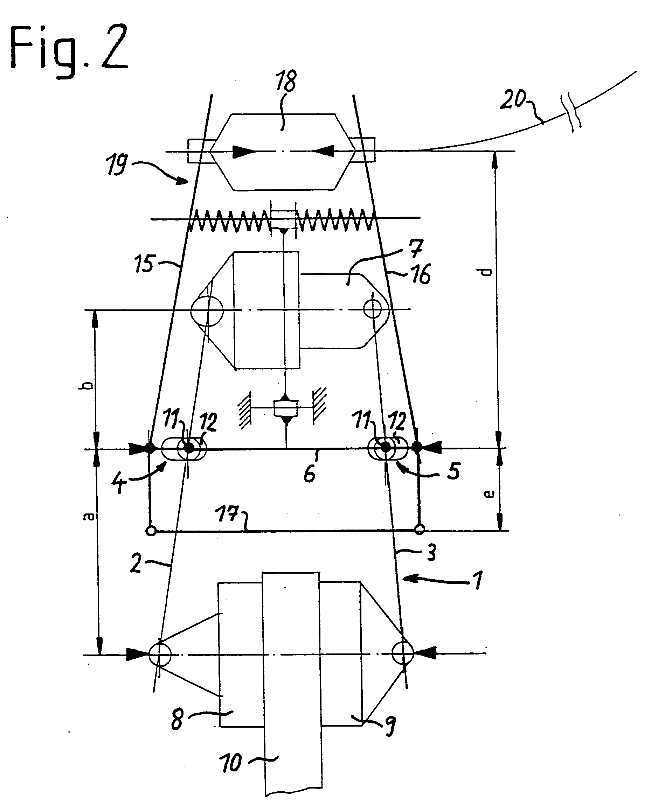

Zu einer Hand- bzw. Feststellbremsung werden die feststellbremskraftmotorseitigen Enden der Zangenhebel 15 und 16 zusammengezogen, die Zangenhebel 15 und 16 drehen sich um ihre Anlenkstellen an der zweiten Zugstange 17 und bewegen dabei vermittels der Hebelansätze 13 und 14 die Anlenkbolzen 11 derart, daß die beiden Anlenkbolzen 11 in den Ausnehmungen 12 der Zugstange 6 sich aufeinander zubewegen. Die Anlenkbolzen 11 nehmen dabei die Bremshebel 2 und 3 mit, welche sich hierbei um ihre Anlenkungen am Bremszylinder 7 drehen und die Bremsbacken 8 und 9 an die Bremsscheiben 10 anlegen und anpressen. Dieser Bremszustand ist in Fig.2 dargestellt.

Wird bei bestehender Hand- bzw. Feststellbremsung zusätzlich eine Betriebsbremsung bewirkt, so verbleibt die Bremszange 1 in der vorstehend beschriebenen Lage, bis die Betriebsbremskraft die Hand- bzw. Feststgellbremskraft derart übersteigt, daß sie vermittels der Bremshebel 2 und 3 die Anlenkbolzen 11 wieder bis zu deren Anlegen an den äußeren, einander abgewandten Begrenzungen der Ausnehmungen 12 auseinanderzuspreizen vermag; die feststellbremskraftmotorseitigen Enden der Zangenhebel 15 und 16 werden dabei entsprechend auseinandergespreizt, diese Spreizbewegung kann bei in Ruhe verbleibender, wie erwähnt nicht dargestellter Handbetätigungsvorrichtung durch den Federspeicher 21 aufgenommen werden. Entsprechende Vorgänge ergeben sich, wenn bei bestehender Betriebsbremsung zusätzlich die Hand- bzw. Feststellbremse betätigt wird: Erst wenn deren Zuspannkraft überwiegt, werden die Anlenkbolzen 11 in den Ausnehmungen 12 in Annäherungsrichtung verschoben. Es ergibt sich somit, daß bei gleichzeitiger Betätigung von Hand- bzw. Feststellbremse und Betriebsbremse hinsichtlich der Zuspannung der Bremsbacken 8 und 9 gegen die Bremsscheibe 10 keine Kraftaddition erfolgt, sondern nur die Kraft der jeweils stärker betätigten Bremseinrichtung, Hand- bzw. Feststellbremse oder Betriebsbremse, zur Auswirkung gelangt.

Zum Lösen der Hand- bzw. Feststellbremse werden die Zangenhebel 15 und 16 von dem Feststellbremskraftmotor 18 wieder freigegeben, so daß sie von den Druckfedern 27 und 28 auseinander gespreizt werden und die Anlenkbolzen 11 unter Abheben der Bremsbacken 8 und 9 von der Bremsscheibe 10 - bei gelöster Betriebsbremse - wieder zur Anlage an den außenseitigen Begrenzungen der Ausnehmungen 12 gelangen.

Um ein Schwingen, insbesondere des Feststellbremsgestänges 19, zu vermeiden, kann es zweckmäßig sein, ausgehend von der Lösestellung nach Fig.1 auf der Querstange 22 außenseitig zu den Zangenhebeln 15 und 16 jeweils einen an diesen Zangenhebeln gerade anliegenden, nicht dargestellten Anschlag anzuordnen: Diese Anschläge schließen ein seitliches Ausschwingen der Zangenhebel durch gemeinsames Drehen um die Anlenkbolzen 11 aus, sie behindern jedoch nicht eine Hand- bzw. Feststellbremsung, bei welchen sich die Zangenhebel 15 und 16 von den Anschlägen abheben. Außerdem wird hierdurch eine federnde Zentrierung des Zuspanngestänges unterstützt und verstärkt, welche durch die Druckfedern 27 und 28 bewirkt wird und im Lösezustand die Bremsbacken 8 und 9 um gleiche Lösehubwege von der Bremsscheibe 10 abgehoben hält.

Es ist ersichtlich, daß die Bremszange 1 ein durch die in Fig.2 eingezeichneten Maße a und b bestimmtes Übersetzungsverhältnis aufweist. Das Feststellbremsgestänge 19 weist ein durch die Maße d und e bestimmtes Übersetzungsverhältnis auf, welches hinsichtlich der Bremsbacken 8 und 9, jedoch entsprechend der Maße a und b reduziert wird. Hieraus ergibt sich, daß das Feststellbremsgestänge 19 die Übersetzungsverhältnisse für die Betriebsbremse nicht beeinflußt, durch entsprechende Wahl der Maße d und e unter Berücksichtigung der Maße a und b hinsichtlich seines Übersetzungsverhältnisses und der an den Bremsbacken 8 und 9 erforderlichen Zuspannkraft den jeweiligen Erfordernissen anpaßbar ist. Das Gesamtübersetzungsverhältnis i der Hand- bzw. Feststellbremsvorrichtung ist gemäß der Formel

$$i = 2\frac{d + e}{e} \times \frac{b}{a + b}$$

errechenbar.

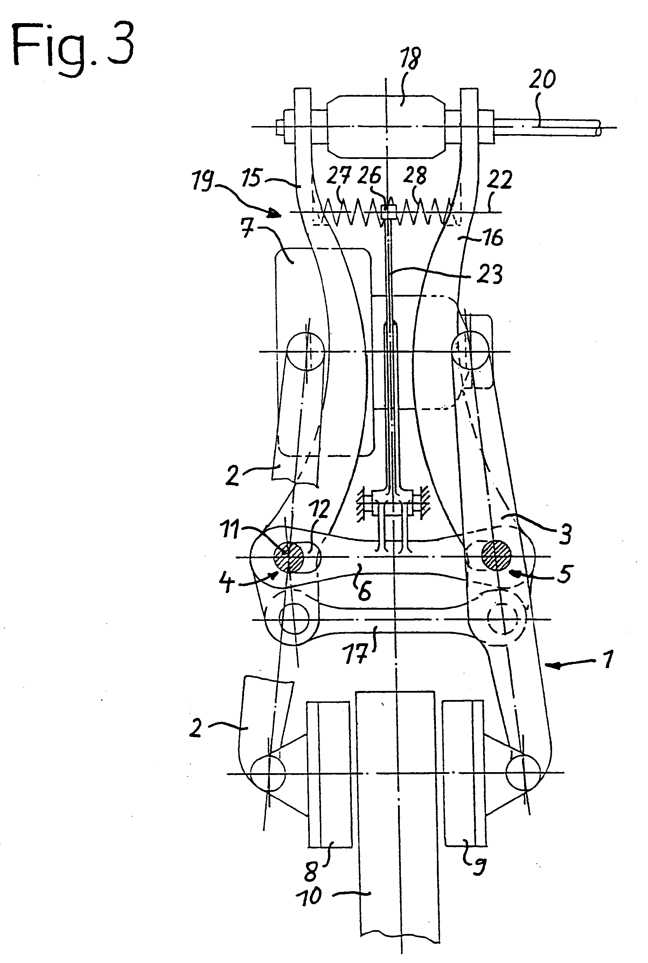

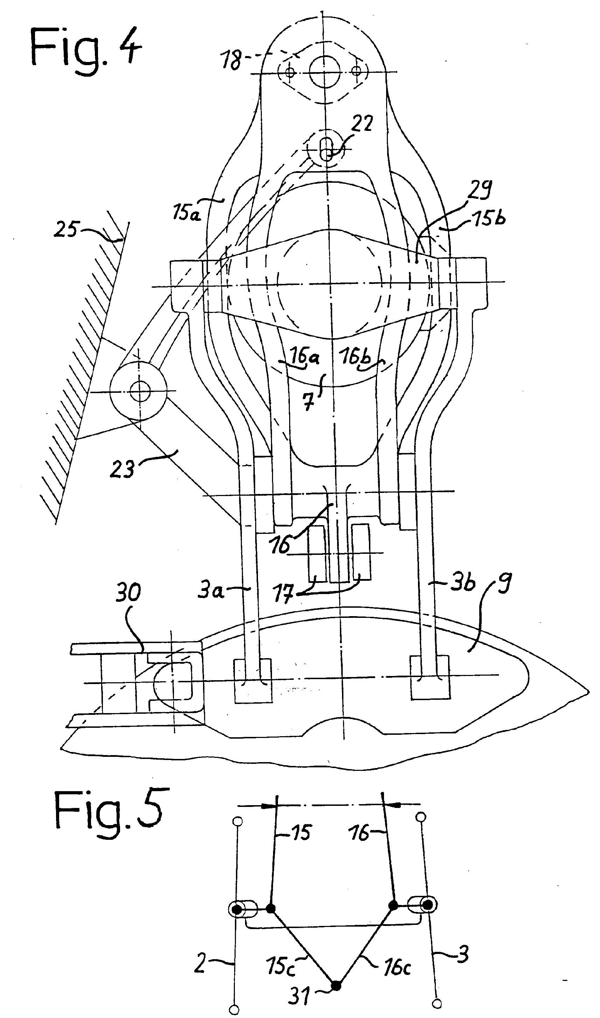

Bei der vorstehend beschriebenen Ausführungsform verlaufen die Zangenhebel 15 und 16 außerhalb der Bremszange 1. Die Figuren 3 und 4 zeigen eine platzsparendere Anordnung, bei welcher die Zangenhebel 15 und 16 sich mit den Bremshebeln 2 und 3 überkreuzend verlaufen, so daß die Gesamtanordnung weniger Platz beansprucht.

Aus Fig.3 ist eine Bremszange 1 ersichtlich, welche in Aufsicht im wesentlichen derjenigen nach Fig .1 entspricht. Die beiden Bremshebel 2 und 3 sind jedoch nicht einfach, sondern doppelwangig als Doppelhebel mit jeweils zwei parallel übereinander verlaufenden Einzelhebeln ausgebildet, wie es Fig.4 mit den Einzelhebeln 3a und 3b zeigt, welche über eine Quertraverse 29 am Bremszylinder 7 angelenkt sind. Die Zangenhebel 15 und 16 bestehen in entsprechender Weise aus parallelen, übereinander befindlichen Einzelhebeln, wie es Fig.4 mit den Einzelhebeln 16a und 16b zeigt. Der Vertikalabstand der Einzelhebel 3a und 3b ist größer als derjenige der Einzelhebel 16a und 16b, so daß letztere die ersteren zu durchgreifen vermögen. Wie aus Fig.3 ersichtlich, sind die Zangenhebel 15 und 16 zueinander konkav gekrümmt ausgebildet, so daß sie zwischen den Anlenkstellen der Bremshebel 2 und 3 am Bremszylinder 7 verlaufen; ihre zugstangenseitigen Endabschnitte sind wiederum abgekröpft. Aus Fig.4 ist ersichtlich, daß im Bereich des Bremszylinders 7 die Einzelhebel 15a und 15b bzw. 16a und 16b jeweils zueinander konvex gekrümmt verlaufen, so daß sie den Bremszylinder 7 berührungsfrei überkeuzen können. Zum leichteren Verständnis sind in Fig.3 und 4 weitere, in ihrer Bedeutung dem Ausführungsbeispiel nach Fig .1 und 2 entsprechende Bezugszahlen eingeschrieben. Aus Fig.4 ist ein Aufhängependel 30 für die Bremsbacke 9 ersichtlich, welches der Bremskraftableitung dient und welches anderseits in nicht dargestellter, üblicher Weise am Fahrzeugrahmen 25 angelenkt ist. Im Bereich der Anlenkbolzen 11 sind die Zangenhebel 15 und 16 wie erwähnt aufeinander zu abgekröpft und gemäß Fig.4 als einfacher Hebel weitergeführt, die Anlenkung an der zweiten Zugstange 17 kann hierdurch raumsparend und leicht ausgebildet werden. In Abänderung ist es selbstverständlich jedoch auch möglich, auch die bremsscheibenseitigen Enden der Zangenhebel 15 und 16 doppelwangig auszubilden.

In weiterer Abänderung gemäß Fig.5 ist es möglich, die Zangenhebel 15 und 16 etwa im Bereich der Anlenkbolzen stark aufeinander zu abzukröpfen, und die abgekröpften Endstücke aneinander mittels einer Gelenkstelle 31 aneinander anzulenken. Auch in Fig. 5 sind zur weiteren Erläuterung der Fig .1 entsprechende Bezugszahlen eingezeichnet.

In Abänderung der beschriebenen Ausführungsbeispiel ist es möglich, die Anlenkstellen 4 und 5 als elastisch auslenkbare Elastomerlager auszubilden, deren jeweils eines Lagerteil mit der Zugstange 6 verbunden ist und an deren jeweils anderem Lagerteil einer der Bremshebel 2 oder 3 sowie ein dem Festellbremsgestänge 19 zugehörender Zangenhebel 15 oder 16 angelenkt sind; die beiden Lagerteile können in Spreizrichtung der Bremszange 1 metallisch gegeneinander abgefangen sein.

**Bezugszeichenliste :**

| | |
|---|---|
| 1 | Bremszange |
| 2 | Bremshebel |
| 3a,b | Einzelhebel |
| 4 | Anlenkstelle |
| 5 | Anlenkstelle |
| 6 | Zugstange |
| 7 | Bremszylinder |
| 8 | Bremsbacke |
| 9 | Bremsbacke |
| 10 | Bremsscheibe |
| 11 | Anlenkbolzen |
| 12 | Ausnehmung |
| 13 | Hebelansatz |
| 14 | Hebelansatz |
| 15 | Zangenhebel |
| 15a,b | Einzelhebel |
| 15c | Endstück |
| 16 | Zangenhebel |

| 16a,b | Einzelhebel |
|---|---|
| 16c | Endstück |
| 17 | Zugstange |
| 18 | Feststellbremsmotor |
| 19 | Feststellbremsgestänge |
| 20 | Bowdenzug |
| 21 | Federspeicher |
| 22 | Querstange |
| 23 | Traghebel |
| 24 | Halterung |
| 25 | Fahrzeugrahmen |
| 26 | Halterung |
| 27 | Druckfeder |
| 28 | Druckfeder |
| 28a,b,d,e | Maße |
| 29 | Quertraverse |
| 30 | Aufhängependel |
| 31 | Gelenkstelle |

## Patentansprüche

1. Zuspanngestänge für Scheibenbremsen von Fahrzeugen, insbesondere Schienenfahrzeugen, mit einer Bremszange (1), deren beide Bremshebel (2,3) an einem Betriebsbremskraftmotor, insbesondere Bremszylinder (7), und an ihren anderen Enden an gegen eine Bremsscheibe (10) anpreßbaren Bremsbacken (8,9) angelenkt sind, mit einer die Bremshebel (2,3) in deren mittleren Bereich verbindenden Zugstange (6), deren Länge mittels einer Hand- bzw. Feststellbremsvorrichtung verkürzbar ist, dadurch gekennzeichnet, daß die Bremshebel (2,3) an der Zugstange (6) vermittels Anlenkstellen (4,5), die in Längsrichtung der Zugstange (6) zumindest in Spreizrichtung begrenzt verschieblich sind, angelenkt sind, daß ein von Hand oder vermittels eines Feststellbremskraftmotors (18), insbesondere eines Federspeichers, betätigbares, zangenartiges Feststellbremsgestänge (19) vorgesehen ist und daß die Anlenkstellen (4,5) vermittels des Feststellbremsgestänges (19) einander annäherbar sind.

2. Zuspanngestänge nach Anspruch 1 , dadurch gekennzeichnet, daß die Anlenkstellen (4,5) Gelenkstellen, insbesondere Anlenkbolzen (11) aufweisen, welche in langlochartigen Ausnehmungen (12) der Zugstange (6) in deren Längsrichtung verschieblich sind und welche die Bremshebel (2,3) mit der Zugstange (6) und dem Feststellbremsgestänge (19) zugehörenden Zangenhebeln (15,16) koppeln.

3. Zuspanngestänge nach Anspruch 1 , dadurch gekennzeichnet, daß die Anlenkstellen als elastisch auslenkbare Elastomerlager ausgebildet sind, deren eines Lagerteil mit der Zugstange verbunden ist und an deren anderem Lagerteil einer der Bremshebel sowie ein dem Feststellbremsgestänge zugehörender Zangenhebel angelenkt sind.

4. Zuspanngestänge nach Anspruch 2 oder 3, dadurch gekennzeichnet, daß das Feststellbremsgestänge (19) zwei Zangenhebel (15,16) aufweist, die im wesentlichen parallel zu den Bremshebeln (2,3) verlaufen, deren eine Enden von Hand oder vermittels des Feststellbremskraftmotors (18) einander annäherbar sind, deren andere Enden unmittelbar oder vermittels einer zweiten Zugstange (17) aneinander angelenkt und welche, bezogen auf ihre Länge, mit geringem Abstand zu den anderen Enden mit den Gelenkstellen (4,5) bzw. anderem Lagerteil gekoppelt sind.

5. Zuspanngestänge nach Anspruch 4, dadurch gekennzeichnet, daß sich zwischen den Zangenhebeln (15,16) nahe deren bremsscheibenabgewandten Enden eine Querstange (22) erstreckt, die mittig vermittels einer fahrzeugfesten Halterung (26) gehaltert ist, und daß zwischen die Halterung (26) und jeden der relativ zur Querstange (22) beweglichen Zangenhebel (15,16) eine von der Querstange (22) geführte Druckfeder (27,28) mit Vorspannung eingespannt ist.

6. Zuspanngestänge nach Anspruch 4, dadurch gekennzeichnet, daß die Querstange (22) seitlich der einander abgewandten Seiten der Zangenhebel (15,16) deren Spreizbewegung begrenzende Anschläge aufweist.

7. Zuspanngestänge nach Anspruch 5 oder 6, gekennzeichnet00urch einen am Fahrzeugrahmen (25) befestigbaren Traghebel (23), an welchem die Zugstange (6) und die Halterung (26) befestigt sind.

8. Zuspanngestänge nach einem oder mehreren der vorstehenden Ansprüche, dadurch gekennzeichnet, daß die Zangenhebel (15,16) seitlich neben der Bremszange (1) verlaufen.

9. Zuspanngestänge nach einem oder mehreren der Ansprüche 1 bis 7, dadurch gekennzeichnet, daß die Zangenhebel (15,16) wenigstens in einem Teil ihrer Längserstreckung innerhalb der Bremszange (1) verlaufen.

10. Zuspanngestänge nach Anspruch 9, dadurch gekennzeichnet, daß zumindest die Zangenhebel (15,16) und ggfs. auch die Bremshebel (2,3) doppelwangig mit je zwei parallelen, lotrecht zu ihrer Bewegungsebene zueinander versetzten Einzelhebeln (3a,b;15a,b;16a,b) ausgebildet sind, daß die Zangenhebel (15,16) und die Bremshebel (2,3) einander teilweise lotrecht überlappen und daß die Zangenhebel (15,16) mit ihren Einzelhebeln (15a,b;16a,b) den Betriebsbremskraftmotor (Bremszylinder 7) lotrecht zur Bewegungsebene übergreifen.

11. Zuspanngestänge nach Anspruch 10, dadurch gekennzeichnet, daß die Zangenhebel (15,16) zueinander konkav gekrümmt verlaufen, wobei sie in ihrem mittleren, den geringsten Abstand zueinander aufweisenden Bereich zwischen den Bremshebeln (2,3) verlaufen und mit ihren Einzelhebeln (15a,b;16a,b) den Betriebsbremskraftmotor (7) jeweils beidseitig übergreifen.

12. Zuspanngestänge nach Anspruch 4, dadurch gekennzeichnet, daß die Zangenhebel (15,16) nahe der Gelenkstellen (4,5) abgekröpft sind, derart, daß sie in Annäherungsrichtung an die Bremsscheibe (10) sich einander annähern.

13. Zuspanngestänge nach einem oder mehreren der vorstehenden Ansprüche, dadurch gekennzeichnet, daß das Feststellbremsgestänge (19) vermittels eines Bowdenzuges (20) betätigbar ist, dessen Seele am Ende des einen und dessen Hülle am Ende des anderen Zangenhebels (15,16) angelenkt ist.


**Claims**

1. Clamping linkage for disc brakes in vehicles, in particular rail vehicles, having a brake clamp (1) whose two brake levers (2, 3) are pivoted on a service brake force motor, in particular a brake cylinder (7), and on their other ends on brake shoes (8, 9) which can be pressed against a brake disc (10), having a tie rod (6) joining the brake levers (2, 3) in their middle region, the length of which tie rod can be shortened by means of a manual or locking brake device,
characterised in that the brake levers (2, 3) are pivoted on the tie rod (6) by means of pivot points (4, 5) which are movable in the longitudinal direction of the tie rod by a limited amount at least in the expanding direction, in that a pincer-like locking brake linkage (19), actuatable manually or by means of a locking brake force motor (18), in particular a spring energy store, are provided, and in that the pivot points (4, 5) can be brought closer to each other by means of the locking brake linkage (19).

2. Clamping linkage according to claim 1,
characterised in that the pivot points (4, 5) are hinged points, in particular hinge bolts (11), which are movable in oblong recesses (12) of the tie rod (6) in their longitudinal direction and which join the brake levers (2, 3) to the tie rod (6) and to pincer levers (15, 16) associated with the locking brake linkage (19).

3. Clamping linkage according to claim 1,
characterised in that the pivot points are formed as resiliently deflectable elastomer bearings, one bearing part of which is connected to the tie rod and on whose other bearing part one of the brake levers and a pincer lever associated with the locking brake linkage are pivoted.

4. Clamping linkage according to claim 2 or 3,
characterised in that the locking brake linkage (19) has two pincer levers (15, 16) which extend substantially parallel to the brake levers (2, 3), one set of ends of which can be brought closer together manually or by means of the locking brake force motor (18), the other ends of which are pivoted directly or by means of a second tie rod (17) to one another, the pincer levers being coupled to the pivot points (4, 5) or the other bearing part, as the case may be, with a small spacing from the said other ends with respect to their length.

5. Clamping linkage according to claim 4,
characterised in that between the pincer levers (15, 16), near their ends remote from the brake disc, there extends a cross bar (22) which is mounted in the middle by means of a holding means (26) fixed to the vehicle, and in that between the holding means (26) and each of the pincer levers (15, 16) movable relatively to the cross bar (22) a compression spring (27, 28), guided by the cross bar (22), is clamped with prestress.

6. Clamping linkage according to claim 4,
characterised in that laterally of the sides of the pincer levers (15, 16) remote from each other the cross bar (22) has stops limiting their expanding movement.

7. Clamping linkage according to claim 5 or 6,
characterised by a carrier lever (23), fixable on a vehicle chassis (25), on which lever the tie rod (6) and the holding means (26) are secured.

8. Clamping linkage according to one or several of the preceding claims, characterised in that the pincer levers (15, 16) extend laterally alongside the brake clamp (1).

9. Clamping linkage according to one or several of claims 1 to 7, characterised in that the pincer levers (15, 16) extend at least over part of their length within the brake clamp (1).

10. Clamping linkage according to claim 9,
characterised in that at least the pincer levers (15, 16) and possibly also the brake levers (2, 3) are constructed with double walls having two parallel individual levers (3a, b; 15a, b; 16a, b) offset from each other perpendicularly to their plane of movement, in that the pincer levers (15, 16) and the brake levers (2, 3) overlap partially perpendicularly with respect to each other, and in that the pincer levers (15, 16) engage over the service brake force motor (brake cylinder 7) with their individual levers (15a, b; 16a, b) perpendicularly to the plane of movement.

11. Clamping linkage according to claim 10,
characterised in that the pincer levers (15, 16) extend curved concavely with respect to each other, whereby they extend between the brake levers (2, 3) in their middle region having the smallest spacing with respect to each other and, with their individual levers (15a, b; 16a, b), each engage over the service brake force motor (7) on both sides.

12. Clamping linkage according to claim 4,
characterised in that the pincer levers (15, 16) are cranked near the pivot points (4, 5) in such a way that they come closer together in the approach direction of the brake disc (10).

13. Clamping linkage according to one or more of the preceding claims, characterised in that the locking brake linkage (19) can be actuated by means of a Bowden cable (20) whose core is joined at the end of one pincer lever (15, 16) and whose casing is pivoted at the end of the other pincer lever (15, 16).

**Revendications**

1. Timonerie de serrage pour des freins à disques de véhicules, notamment des véhicules sur rails, comportant un étrier de frein (1), dont les deux leviers (2,3) sont articulés sur un générateur de la force de freinage de service, notamment un cylindre de frein (7), et, à leurs autres extrémités, à des mâchoires de frein (8,9) qui peuvent être serrées contre un disque de frein (10), et comportant une barre de traction (6), qui relie les leviers de frein (2,3) dans leur partie médiane et dont la longueur peut être réduite au moyen d'un dispositif de frein à main ou de stationnement, caractérisée par le fait que les leviers de frein (2,3) sont articulés sur la barre de traction (6) au moyen de points d'articulation (4,5), qui sont déplaçables d'une manière limitée, au moins dans la direction d'écartement, dans la direction longitudinale de la barre de traction (6), qu'il est prévu une timonerie (19) du frein de stationnement en forme de pince, qui peut être actionnée manuellement ou par l'intermédiaire d'un générateur de la force de freinage de stationnement (18), notamment un ressort accumulateur, et que les points d'articulation (4,5) peuvent être rapprochés l'un de l'autre au moyen de la timonerie (19) du frein de stationnement.

2. Timonerie de serrage suivant la revendication 1, caractérisée par le fait que les points d'articulation (4,5) possèdent des articulations, notamment des axes d'articulation (11), qui sont déplaçables dans des évidements en forme de trous allongés (12) de la barre de traction (6), dans la direction longitudinale de cette dernière et qui accouplent les leviers de frein (2,3) aux leviers (15,16) de l'étrier, qui sont associés à la barre de traction (6) et à la timonerie (19) du frein de stationnement.

3. Timonerie de serrage suivant la revendication 1, caractérisée par le fait que les points d'articulation sont agencés sous la forme de paliers élastomères pouvant être déviés élastiquement et dont un élément est raccordé à la barre de traction, tandis que sur l'autre de ces éléments, sont articulés l'un des leviers de frein ainsi qu'un levier d'étrier, associé à la timonerie du frein de stationnement.

4. Timonerie de serrage suivant la revendication 2 ou 3, caractérisée par le fait que la timonerie (19) du frein de stationnement comporte deux leviers formant étriers (15,16), qui sont sensiblement parallèles aux leviers de frein (2,3), dont des premières extrémités peuvent être rapprochées l'une de l'autre manuellement ou au moyen du générateur de la force de freinage de stationnement (18) et dont les autres extrémités sont articulées l'une sur l'autre directement par l'intermédiaire d'une seconde barre de traction (17) et qui sont accouplées aux articulations (4,5) ou à l'autre élément de palier, à une faible distance des autres extrémités, rapportée à leur longueur.

5. Timonerie de serrage suivant la revendication 4, caractérisée par le fait qu'entre les leviers formant pinces (15,16) et à proximité de leurs extrémités situées à l'opposé des disques de frein, s'étend une barre transversale (22), qui est retenue en position médiane au moyen d'un dispositif de retenue (26) solidaire du véhicule, et qu'entre le dispositif de retenue (26) et chaque levier formant pince (15,16), qui est déplaçable par rapport à la barre transversale (22), est serré, avec précontrainte, un ressort de pression (27,28) qui est guidé par la barre transversale (22).

6. Timonerie de serrage suivant la revendication 4, caractérisée par le fait que la barre transversale (22) possède latéralement, sur les côtés réciproquement opposés, des leviers formant pinces (15,16), des butées limitant le mouvement d'écartement de ces leviers.

7. Timonerie de serrage suivant la revendication 5 ou 6, caractérisée par un levier de support (23), qui peut être fixé sur le châssis (25) du véhicule et auquel sont fixés la barre de traction (6) et le dispositif de retenue (26).

8. Timonerie de serrage suivant une ou plusieurs des revendications précédentes, caractérisé par le fait que les leviers formant pinces (15,16) s'étendent latéralement côté de l'étrier de frein (1).

9. Timonerie de serrage suivant une ou plusieurs des revendications 1 à 7, caractérisée par le fait que les leviers formant pinces (15,16) s'étendent sur au moins une partie de leur étendue longitudinale, à l'intérieur de l'étrier de frein (1).

10. Timonerie de serrage suivant la revendication 9, caractérisée par le fait qu'au moins les leviers formant pinces (15,16) et éventuellement également les leviers de frein (2,3) sont agencés à double paroi et comprennent chacun deux leviers individuels parallèles (3a,b; 15a,b; 16a,b), décalés l'un par rapport à l'autre perpendiculairement à leur plan de déplacement, que les leviers formant pinces (15,16) et les leviers de frein (2,3) se chevauchent partiellement dans le sens vertical et que les leviers formant pinces (15,16) s'engagent par leurs leviers individuels (15a,b; 16a,b) par-dessus le générateur de la force de freinage de service (cylindre de frein (7)), perpendiculairement au plan de déplacement.

11. Timonerie de serrage suivant la revendication 10, caractérisée par le fait que les leviers formant pinces (15,16) sont cintrés avec des formes concaves tournées l'une vers l'autre, les zones médianes, qui sont tournées l'une vers l'autre en étant séparées par la plus faible distance, des leviers formant pinces s'étendent entre les leviers de frein (2,3), tandis que leurs leviers individuels (15a,b; 16a,b) s'engagent respectivement des deux côtés au-dessus du générateur (7) de la force de freinage de service.

**12.** Timonerie de serrage suivant la revendication 4, caractérisée par le fait que les leviers formant pinces (15,16) sont coudés à proximité des articulations (4,5) de telle sorte qu'ils se rapprochent l'un de l'autre dans la direction de leur rapprochement vers le disque de frein (10).

**13.** Timonerie de serrage suivant une ou plusieurs des revendications précédentes, caractérisée par le fait que la timonerie (19) du frein de stationnement peut être actionnée au moyen d'un câble de traction Bowden (20), dont l'âme est articulée sur l'extrémité d'un levier formant pince (15,16) et dont la gaine est articulée sur l'extrémité de l'autre levier formant pince (15,16).

# Fig. 1

# Fig. 2

# Fig. 3

Fig. 4

Fig. 5